# DEMANDE DE BREVET EUROPEEN

(11) **EP 1 191 765 A2**
(43) Date de publication de la demande: **27.03.2002**
(21) Numéro de dépôt: 01402228.9
(22) Date de dépôt: 27.08.2001
(51) Int. Cl.: H04L 29/06, H04M 7/00

(54) **Procédé de contrôle d'une passerelle média**

(30) Priorité: 22.09.2000 FR 0012097
(71) Demandeur: ALCATEL, 75008 Paris (FR)
(72) Inventeur: Levy, Thomas, 75013 Paris (FR); Anquetil, Laurent Philippe, 75015 Paris (FR)
(74) Mandataire: Sciaux, Edmond

(57) **Abrégé**

Procédé pour permettre à un contrôleur de passerelles médias (MGC) d'accéder à des informations sur les capacités d'une passerelle média (MG), caractérisé en ce qu'il comporte des étapes ordonnées :
- d'émission par ledit contrôleur de passerelles médias, d'un message de requête (3) de profil, à destination de la passerelle média,
- d'émission par la passerelle média, à destination du contrôleur de passerelles médias, d'un message (4) contenant les informations en question.

## Description

La présente invention concerne un protocole de signalisation entre une passerelle média et un contrôleur d'une telle passerelle. Elle s'applique particulièrement bien au protocole Megaco défini par l'IETF (*Internet Engineering Task Force*).

Une passerelle média (ou *Media Gateway*, en langue anglaise) a pour but de convertir des données multimédias entre deux réseaux de natures différentes. Ces données multimédias peuvent être de la voix, de la vidéo ou d'autres types de données. Par exemple, une passerelle média peut être utilisée entre un réseau téléphonique commuté classique et un système de téléphonie sur réseau internet (connu sous l'acronyme VoIP pour *Voice over Internet Protocol*).

Les passerelles médias sont gérées par des contrôleurs de passerelles médias, appelés Media Gateway Controllers en anglais.

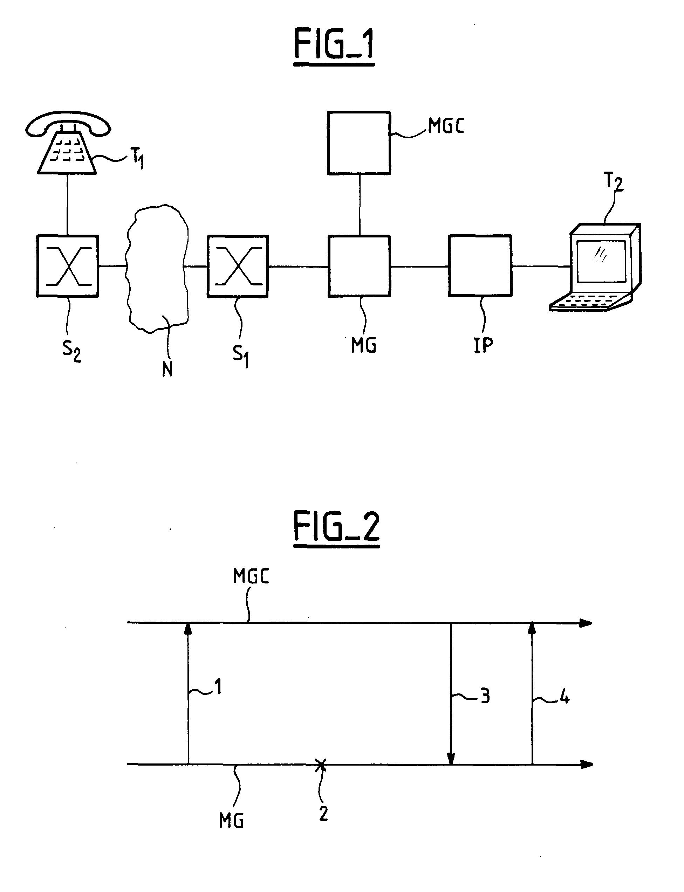

La figure 1 montre un exemple d'utilisation d'une passerelle média et de son contrôleur.

La passerelle média MG est connectée d'un coté à un commutateur S₁ et de l'autre à un système VoIP, référencé IP sur la figure.

Le commutateur S₁ est lui-même connecté à un réseau de télécommunication N. Un terminal T₁ est par ailleurs connecté à ce même réseau de télécommunication N par l'intermédiaire d'un commutateur S₂.

Un second terminal T₂ est directement connecté au système de téléphonie sur Internet, référencé IP.

Lorsqu'une communication est établie entre les deux terminaux T₁ et T₂, la passerelle média MG a pour rôle de convertir les données multimédia entre les protocoles mis en oeuvre par chacun des réseaux N et IP.

Cette passerelle média MG est gérée par un contrôleur de passerelles médias MGC. Il est à noter qu'un même contrôleur de passerelles médias peut gérer plusieurs passerelles médias.

Afin de pouvoir correctement gérer les passerelles médias dont il a la charge, un contrôleur de passerelles médias doit disposer d'informations sur l'état de ces passerelles médias.

Une première approche pour résoudre ce problème est décrite dans le cadre du protocole Megaco, standardisé par l'ITU-T (*International Telecommunication Union*) sous la référence H.248 intitulée « *Gateway Control Protocol* ».

Selon ce standard, lorsqu'une passerelle média devient active (à la suite d'un allumage, notamment), elle transmet au contrôleur de passerelles médias auquel elle est associée, un message contenant un identificateur de profil correspondant à ses capacités. Ces profils sont prédéfinies, c'est-à-dire qu'il existe un ensemble limité de profils auquel une passerelle média peut correspondre.

Pour cette raison, une telle façon de faire n'est pas satisfaisante.

En effet, les capacités d'une passerelle média peuvent évoluer au cours de son fonctionnement. En effet, une panne, par exemple, peut survenir et dégrader les capacités d'une passerelle média.

En ce cas, les probabilités pour que le nouvel état de la passerelle média corresponde à un des profils prédéfinis sont très faibles. Lors de son redémarrage, la passerelle média ne pourra donc que transmettre l'identifiant d'un profil correspondant approximativement à ses nouvelles capacités.

Par conséquent, avec la solution de l'état de la technique, le contrôleur de la passerelle média en question ne dispose d'aucun moyens pour prendre connaissance des capacités précises, et à un instant donné, de celle-ci.

Le risque est alors double :
- Le contrôleur de passerelles médias peut demander à la passerelle média une tâche qu'elle n'est pas en mesure de faire.
- Puisqu'un contrôleur de passerelles médias peut gérer plusieurs passerelles médias, il peut mettre en oeuvre des procédés de répartition de charges afin d'optimiser les temps de réponse sur les tâches qu'il a à mener à bien. Dans cette optique, une mauvaise connaissance des capacités des passerelles médias qu'il gère, ne permet pas au contrôleur de passerelles médias d'effectuer une répartition de tâches efficace.

L'invention a donc pour objet de résoudre ce problème en permettant aux contrôleurs de passerelles média d'avoir accès à tout moment aux capacités des passerelles médias.

À ces fins, l'invention a pour objet un procédé pour permettre à un contrôleur de passerelles médias d'accéder à des informations sur les capacités d'une passerelle média. Ce procédé se caractérise en ce qu'il comporte des étapes ordonnées :
- d'émission par le contrôleur de passerelles médias, d'un message de requête de profil, à destination de la passerelle média,
- d'émission par la passerelle média, à destination du contrôleur de passerelles médias, d'un message contenant les informations en question.

L'invention et ses avantages apparaîtront de façon plus claire dans la description qui va suivre, en liaison avec les figures annexées.

La figure 1, déjà commentée, illustre l'environnement technique dans lequel se situe l'invention.

La figure 2 représente un chronogramme illustrant un exemple d'utilisation du procédé selon l'invention.

Comme précédemment évoqué, un contrôleur de passerelles médias peut gérer plusieurs passerelles médias. Inversement, une passerelle média est associée, à un instant donné, à un unique contrôleur de passerelles médias.

Selon le protocole Megaco, lors du démarrage d'une passerelle média MG, celle-ci transmet au contrôleur de passerelles médias MGC auquel elle est associée, un identifiant de profil. Cette transmission est représentée par la flèche référencée 1 sur la figure 2.

Sur cette figure 2, la flèche horizontale du haut représente, de façon chronologique, les événements se déroulant sur la passerelle média MG. La flèche horizontale du bas représente, elle, les événements se déroulant sur le contrôleur de passerelles médias MGC.

À l'issue de cette transmission 1, le contrôleur de passerelles médias a la connaissance des capacités nominales de la passerelle média MG, c'est-à-dire ces capacités initiales.

La référence 2 représente un événement pouvant survenir dans la vie de la passerelle média MG et modifier ses capacités. Il peut par exemple s'agir d'une panne matérielle.

Classiquement, une passerelle média est constituée de plusieurs cartes électroniques insérées dans un châssis et disposant de moyens de communications entre elles. Une panne survenant sur une carte peut nécessiter de retirer celle-ci, au moins de façon momentanée. Or, il est généralement prévu que la passerelle média puisse tout de même fonctionner en un mode de fonctionnement dégradé.

Cependant, dans ce mode de fonctionnement dégradé, la passerelle média n'est pas en mesure de rendre les mêmes services que dans le mode de fonctionnement nominal. Il est donc nécessaire de rendre compte de ce changement au contrôleur de passerelles médias afin qu'il adapte son comportement à la nouvelle situation.

La flèche référencée 3 représente un message de requête transmis par le contrôleur de passerelles médias à destination de la passerelle média.

Ce message de requête peut, par exemple, être envoyé lors du redémarrage de la passerelle média, par exemple à la suite d'une panne. Selon une autre mise en oeuvre de l'invention, le message de requête peut être transmis de façon périodique.

Le protocole Megaco (H.248) ainsi que le procole MGCP (*Media Gateway Control Protocol*) décrit dans le RFC 2705 (*Request For Comments*) de l'IETF (*Internet Engineering Task Force*) possède une fonction d'audit, permettant au contrôleur de passerelles médias de connaître des caractéristiques internes de la passerelle média (valeurs de propriétés... concernant des terminaisons ou connexions).

En reprenant le formalisme de la recommandation H.248 de l'ITU, que l'on ne détaillera pas ici, un message de requête peut contenir une expression du type :
Audit{MediaResources}
Autrement dit, on peut utiliser la fonction « Audit » du protocole défini par la recommandation H.248 et lui ajoutant un paramètre « MediaResource » signifiant que l'on souhaite « auditer » les capacités de la passerelle média.

La flèche référencée 4 représente un message transmis par la passerelle média MG à destination du contrôle de passerelles médias MGC, en réponse au message de requête 3.

Ce message contient des informations relatives aux capacités de la passerelle média.

Un exemple d'un tel message peut être comme suit, en utilisant le formalisme de la recommandation H.248 de l'ITU :

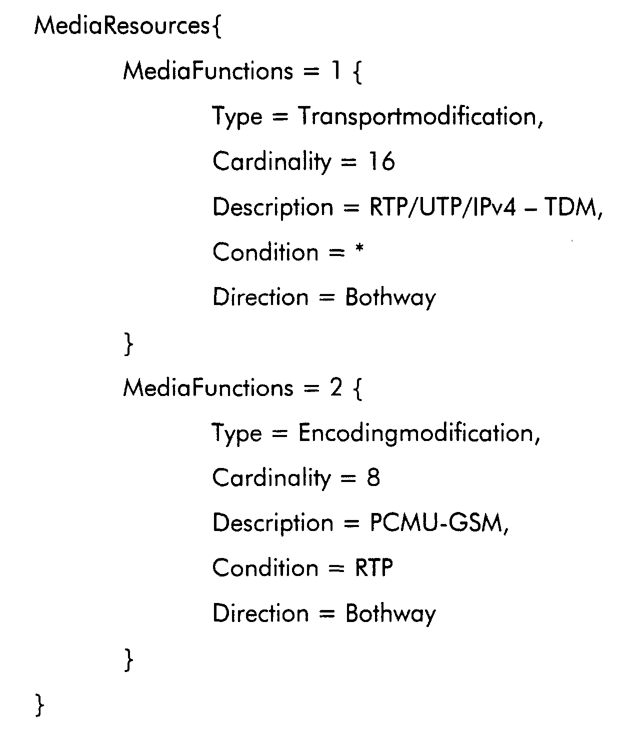

Un message contenant ces informations signifie que la passerelle media peut fournir deux services différents. Ces services sont identifiés par les étiquettes « MediaFunctions=1 » et « MediaFunctions=2 ». Chaque service est ensuite précisé par une suite d'étiquette, sous la forme d'un mot clef suivi du signe « = » et d'une valeur ou d'une suite de valeurs.

La première fonction consiste à modifier le protocole de transport, ainsi que l'indique l'étiquette « type = Transportmodification ».

Ainsi que précisé par l'étiquette « Description », elle permet de convertir les données multimédia entre un premier protocole de type RTP (Real-time Transport Protocol) défini par le document RFC 1889 de l'IETF (*Internet Engineering Task Force*) et un second protocole de type TDM (*Time Division Modulation*).

L'étiquette « Direction = Bothway » signifie que la conversion peut être faite dans les deux sens, et l'étiquette « Cardinality = 16 » signifie que 16 conversions de flux de données multimédia peuvent être gérées simultanément par la passerelle média.

La seconde fonction consiste à convertir la méthode d'encodage des données multimédia. Sa cardinalité est de 8, comme l'indique l'étiquette « Cardinality=8 », ce qui signifie que 8 conversions simultanées peuvent être mises en oeuvre.

L'étiquette « Description » indique la conversion peut être faite entre un format PCMU (*Pulse Code Modulation mu-law (µ*-*law)*) défini par la recommandation G.711 de l'ITU-T (*International Telecommunication Union*) et un format GSM (*Global System for Mobiles*).

L'étiquette « Condition » permet de préciser le protocole de transport qui doit être utilisé pour effectuer cette conversion, ici le protocole RTP déjà évoqué.

Enfin, l'étiquette « Direction » précise que la conversion peut être effectuée dans les deux sens possibles.

## Revendications

1. Procédé pour permettre à un contrôleur de passerelles médias (MGC) d'accéder à des informations sur les capacités d'une passerelle média (MG), **caractérisé en ce qu'**il comporte des étapes ordonnées :
- D'émission par ledit contrôleur de passerelles médias, d'un message de requête (3) de profil, à destination de ladite passerelle média,
- D'émission par ladite passerelle média, à destination dudit contrôleur de passerelles médias, d'un message (4) contenant lesdites informations.

2. Procédé selon la revendication précédente, dans lequel ledit message de requête comporte une expression de type Audit tel que défini par la recommandation H.248 de l'ITU.

3. Procédé selon l'une des revendications 1 et 2, dans lequel ledit message contenant lesdites informations est conforme au formalisme de la recommandation H.248 de l'ITU.

4. Contrôleur de passerelle média, comportant des moyens pour mettre en oeuvre un procédé selon l'une des revendications 1 à 3.

5. Passerelle média, comportant des moyens pour mettre en oeuvre un procédé selon l'une des revendications 1 à 3.
